# EUROPEAN PATENT APPLICATION

(11) **EP 4 785 835 A1**
(43) Date of publication of application: **05.08.2026**
(21) Application number: 24872883.4
(22) Date of filing: 25.09.2024
(51) Int. Cl.: A47J 42/38, A47J 42/06

(54) **VARIABLE GRINDING METHOD FOR IMPROVING COFFEE FLAVOR COMPLEXITY**

(30) Priority: 26.09.2023 KR 20230129813
(71) Applicant: Bahk, Jae Hyun, Gumi-si Gyeongsangbuk-do 39247 (KR)
(72) Inventor: Bahk, Jae Hyun, Gumi-si Gyeongsangbuk-do 39247 (KR)
(74) Representative: Gulde & Partner
(86) International application number: PCT/KR2024/014446
(87) International publication number: WO 2025/071175

(57) **Abstract**

Provided is a variable grinding method for improving coffee flavor complexity, in which variable grinding is performed according to variable grind size, grind shift value and grind unit that are set by a user in the middle of the overall grinding process on the basis of a preset reference grind size and grind unit, the method comprising the steps of: (a) supplying power to a coffee grinder as preliminary preparation, and loading an existing profile or newly creating a profile as a variable grinding user profile to be used; (b) setting, in the prepared profile, the reference grind size, and the variable grind sizes, the grind units and the grind shift values within the overall steps; (c) performing a variable grinding function while grinding coffee beans by using the set reference grind size, and the variable grind sizes, the grind units and the grind shift values of the overall steps; and (d) terminating the variable grinding function when grinding of the coffee beans is completed, and thus the grind size is varied when the coffee beans are ground, such that coffee flavor complexity can be improved to satisfy the preferences and personality of the user.

## Description

### Technical Field

The present disclosure relates generally to a coffee grinder. More particularly, the present disclosure relates to a method for variably adjusting the grind size in the course of a grinding process so as to increase the flavor complexity of coffee, allowing users to create a tailored flavor profile that suits individual preferences and unique taste requirements.

### Background Art

In recent years, as the demand for coffee is growing substantially, there has been a notable market shift from instant coffee towards brewed coffee which offers the inherent aromas and flavors of coffee beans.

Typically, brewed coffee is prepared by pouring hot water over coffee grounds, during which the water drips through the grounds, thereby extracting soluble compounds.

Conventional coffee grinders are designed to produce coffee grounds with a fixed grind size, in which coffee beans are crushed into uniform particles. Consequently, the extracted coffee yields a single flavor profile determined by this fixed grind settings.

Examples of such conventional coffee grinders are disclosed in Patent Document 1 (Korean Patent Application Publication No. 10-2023-0039994) and Patent Document 2 (Korean Patent No. 10-1931451). Meanwhile, with the rapid increase in the number of coffee enthusiasts, there is a growing demand for coffee grinder technologies that allow users to customize the flavor profile of their coffee to a wider range of preferences and unique taste requirements, rather than being limited to a single fixed flavor.

### Disclosure

### Technical Problem

Accordingly, the present disclosure has been made keeping in mind the above problems occurring in the related art, and one objective of the present disclosure is to provide a method for variably adjusting the grind size in the course of a grinding process so as to increase the flavor complexity of coffee, allowing users to create a tailored flavor profile that suits individual preferences and unique taste requirements.

### Technical Solution

In order to accomplish the above objective, the present disclosure provides a variable grinding method for improving coffee flavor complexity, in which variable grinding is performed according to user-specified parameters including a variable grind size, a grind shift value, and a grind unit in the course of a grinding process, based on a preset reference grind size and a preset grind unit, the method including the steps of: (a) preliminarily supplying power to a coffee grinder and loading an existing profile or creating a new one as a variable grinding user profile to be used; (b) setting, in the prepared profile, a reference grind size, and variable grind sizes, grind units, and grind shift values for the overall stages of the profile; (c) performing a variable grinding function while grinding coffee beans, based on the reference grind size, and the variable grind sizes, grind units, and grind shift values defined for the overall stages; and (d) terminating the variable grinding function when the grinding of coffee beans is completed.

### Advantageous Effects

As described above, a variable grinding method for improving coffee flavor complexity according to the present disclosure enables a single coffee grinder to produce a wide spectrum of flavor profiles, effectively emulating the characteristics of multiple different grinder types.

In particular, the disclosure enables the extraction of coffee with enhanced flavor complexity by producing a broader particle size distribution similar to that of a conical-burr grinder, rather than a flat-burr grinder with an otherwise fixed and consistent flavor profile.

Additionally, the disclosure can be applied to various other grinder types beyond conical-burr systems, offering a wide range of additional flavor variations.

Furthermore, because the present disclosure functions analogously to adding salt, sugar, or seasonings in cooking, excessive variations may rather degrade the overall flavor. Accordingly, by allowing users to save specific settings according to their personal preferences, the disclosure enables convenient and consistent preparation of coffee with the desired degree of flavor complexity.

### Description of Drawings

FIG. 1 is a view illustrating a coffee grinder with a conical burr.
FIG. 2 is a view illustrating a process of grinding coffee beans using the conical burr illustrated in FIG. 1.
FIG. 3 is a view illustrating a coffee grinder with a flat burr.
FIG. 4 is a view illustrating a process of grinding coffee beans using the flat burr illustrated in FIG. 3.
FIG. 5 is a graph illustrating the grind size and particle size of coffee beans.
FIG. 6 is a view illustrating the adjustment of the grind size in a coffee grinder.
FIG. 7 is a view illustrating examples of a method for adjusting the grind size in a coffee grinder.
FIG. 8 is a flowchart illustrating
   the step-by-step procedure of a variable grinding method for improving coffee flavor complexity according to a preferred embodiment of the present disclosure.
FIG. 9 is a view illustrating various methods for determining the grind size in the variable grinding method.
FIG. 10 is a view illustrating an exemplary implementation of the variable grinding method.
FIG. 11 is a view illustrating the results of the variable grinding method.
FIG. 12 is a view illustrating the actual use state of the variable grinding method.

### Mode for Invention

Hereinafter, a variable grinding method for a coffee grinder according to a preferred embodiment of the present disclosure will be described in detail with reference to the accompanying drawings.

Conventional coffee grinders employ a fixed grind size. To achieve greater flavor complexity, manufacturers typically differentiate the geometry of their burrs. As a result, variations in flavor arise from differences in the particle size ratio.

However, such conventional technologies, which rely on a fixed grind size, present limitations for users seeking more diverse flavor profiles. Accordingly, the present disclosure aims to enhance the flavor complexity of coffee by allowing users to customize the ratio of particle sizes.

In other words, rather than extracting coffee with a conventional fixed grind size, the user may set a desired particle size distribution by grinding a portion of coffee beans more finely and subsequently grinding another portion more coarsely by an equivalent amount. These finer and coarser adjustments offset each other, resulting in a broader particle size distribution while preserving an overall extraction behavior equivalent to those achieved with the conventional fixed grind size. Consequently, during coffee extraction, optimal extraction may be achieved within the same extraction time as that used for fixed grind size settings. Unlike the conventional fixed particle size distribution of ground coffee beans, the user-specified particle size distribution enables the expression of more complex flavor profiles.

In particular, the present disclosure may be readily implemented in grinders employing flat burrs, conical burrs, or various other grinding mechanisms. Thus, a single grinder may effectively emulate the characteristics of two or three different grinder types, enabling the user to easily increase the degree of freedom in tailoring coffee flavor.

Here, an equal opposite adjustment corresponding to the applied variation in the grind size is required to be applied in order to maintain a consistent extraction resistance during coffee extraction. Accordingly, the particle size distribution of coffee grounds needs to remain substantially identical.

For example, in a conventional coffee grinder operating at a fixed grind size of 5, when the grind time (grind unit) is set to 7 seconds and 20 g of coffee beans are ground, the optimal extraction time may be assumed to be approximately 25 seconds.

Meanwhile, in the present disclosure, when the grind size is modified to be approximately 10% finer and grinding is performed at this varied grind size for 10% of the total grind time, resulting in an approximate 10% increase in the extraction resistance, an equal opposite adjustment may be applied by grinding at a 10% coarser grind size for 10% of the grind time, thereby offsetting the variation in the grind size. As a result, the overall extraction resistance remains nearly unchanged, with an extraction time close to 25 seconds. At the same time, the extracted coffee exhibits a significantly more complex flavor profile due to the resulting broader particle size distribution. This occurs because finer particles have a higher tendency to promote over-extraction, whereas coarser particles are more prone to induce under-extraction. By analogy to cooking, this approach resembles the effect of adding a subtle amount of seasoning to enhance the overall flavor of coffee. Of course, excessively broad particle size distribution may result in a muddied, unbalanced flavor rather than a clean, complex one.

Accordingly, the present disclosure considers the following five methods to improve the flavor complexity of coffee.

The first approach is an equal offset method, in which an upward adjustment (finer grinding) and a downward adjustment (coarser grinding) in the variable grind size of a typical coffee grinder are applied in equal proportions.

The second approach is a grind size calculation method, which is distinct from the aforementioned equal offset approach, in which the variable grind size and the grind unit, such as grind time, weight of ground coffee beans, or volume of ground coffee beans, are numerically quantified. Although this calculation method may not perfectly coincide across different grinder manufacturers due to variations in grinder design, the differences generally remain within acceptable tolerances. Accordingly, by performing an initial grinding and extraction, identifying any difference, and then compensating for it in a second grinding and extraction, optimal extraction may be readily achieved. This is analogous to conventional grinder adjustments, in which the grind size is repeatedly fine-tuned to reach an optimal value and needs to be continually readjusted depending on factors such as weather, temperature, and the type of coffee beans used.

A simple example of this grind size calculation method is as follows: when the reference grind size is 5 and grinding is performed at a finer grind size of 4 (i.e., -1 relative to the reference) for 1 second and at an even finer grind size of 3 (i.e., -2 relative to the reference) for 1 second, an equal opposite adjustment may be applied by grinding at a coarser grind size of 8 (i.e., +3 relative to the reference) for 1 second, thereby offsetting the variation in the grind size.

Accordingly, the second approach offers more advantageous conditions for achieving a broader flavor spectrum and greater flavor complexity compared to the equal offset method. This is because the user may set the particle size distribution of ground coffee beans by selectively combining finer and coarser coffee particles. In general, from the perspective of extraction yield, incorporating finer particles is beneficial for enhancing the flavor of the extracted coffee, whereas producing coarser particles is advantageous for the operational stability of the grinder.

The third approach defines the grind unit based on the grind time during variable grinding. Typical coffee grinders determine the grind amount of coffee beans based on a time setting. However, high-end grinders may incorporate a built-in scale to complete the grinding process based on weight, while specialized grinders may use a built-in camera to complete the grinding process based on the volume of ground coffee beans.

The fourth approach defines the grind unit based on the weight or volume of ground coffee beans during variable grinding.

The fifth approach defines the grind shift value based on the time required for a burr to move to a position corresponding to the desired grind size and whether grinding is to be continued or temporarily halted during burr movement. Haltering grinding during burr movement and resuming it afterward may yield a more precise flavor profile, but repeatedly stopping and restarting a drive shaft and a drive motor within short intervals is mechanically and operationally disadvantageous. Additionally, allowing the grinder to continue operating while the burr is in motion shortens the overall grind time, which may be more favorable for the user. Therefore, grinding generally continues even during the grind size adjustment process, while still allowing the user to select whether grinding is to be haltered or continued during burr movement. Moreover, although grinding itself is not directly related to the time required for burr movement during the grind size adjustment, the burr movement speed may influence the resulting flavor spectrum. Thus, providing the user with the option to control this parameter enables more precise flavor customization.

As described above, the coffee grinder employing the variable grinding method for improving coffee flavor complexity according to the present disclosure may produce a wide range of flavor profiles using a single grinder, effectively emulating the characteristics of multiple different grinder types. In particular, this approach enables the extraction of coffee with enhanced flavor complexity by producing a broader particle size distribution similar to that of a conical-burr grinder, rather than a flat-burr grinder with an otherwise fixed and consistent flavor profile.

Of course, the disclosure may be applied to various other grinder types beyond conical-burr systems, offering a wide range of additional flavor variations.

However, because the present disclosure functions analogously to adding salt, sugar, or seasonings in cooking, excessive variations of these parameters may degrade the overall flavor. Accordingly, by allowing users to save specific settings according to their personal preferences, the disclosure enables convenient and consistent grinding tailored to user's individual preferences and unique taste requirements.

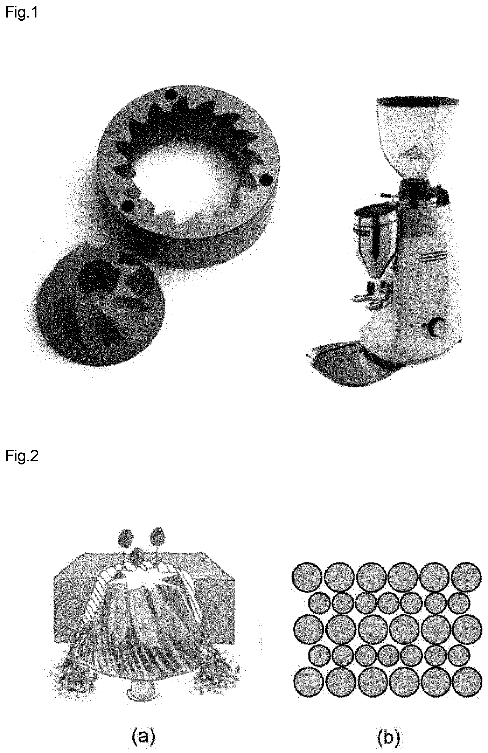

FIG. 1 is a view illustrating a coffee grinder with a conical burr, and FIG. 2 is a view illustrating a process of grinding coffee beans using the conical burr illustrated in FIG. 1.

FIG. 2(a) depicts the state in which coffee beans are ground using the conical burr, and FIG. 2(b) depicts the particle sizes of ground coffee beans produced by the conical burr based on the measured weight of beans.

As illustrated in FIG. 2(b), the conical burr produces coffee grounds of distinct and varying sizes.

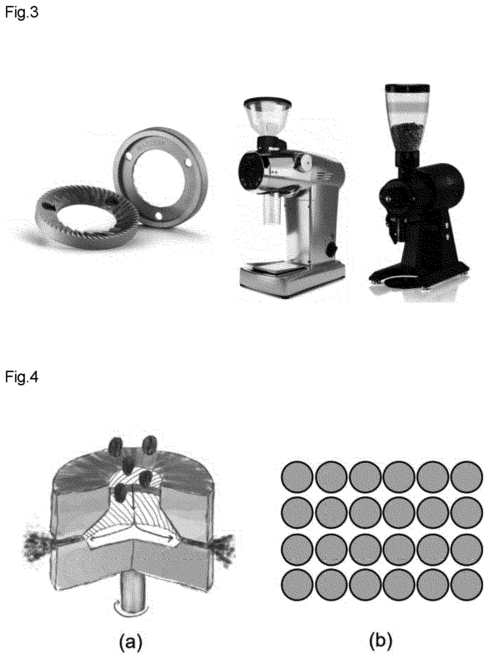

FIG. 3 is a view illustrating a coffee grinder with a flat burr, and FIG. 4 is a view illustrating a process of grinding coffee beans using the flat burr illustrated in FIG. 3.

FIG. 4(a) depicts coffee beans gathering downward as a result of the rotational force generated by the high-speed rotation of the flat burr, and FIG. 4(b) depicts the particle sizes of ground coffee beans produced by the flat burr.

As illustrated in FIG. 4, the flat burr produces coffee grounds with a nearly uniform particle size distribution. While such uniformity may yield a clean and clear flavor profile, it may also result in a flat taste lacking in complexity, depending on user preference.

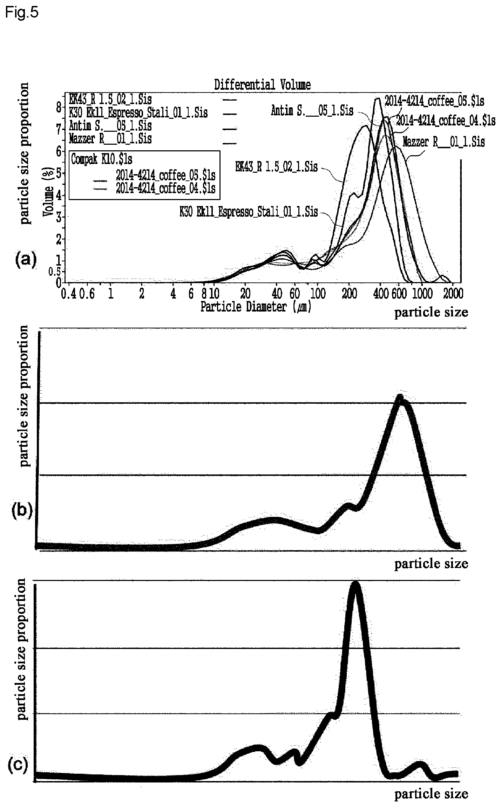

FIG. 5 is a graph illustrating the grind size and the particle size of coffee beans.

FIG. 5(a) depicts particle size distribution graphs for various types of coffee grinders. Here, the horizontal axis represents the particle size of coffee beans, and the vertical axis represents the relative proportion of each particle size fraction.

FIG. 5(b) depicts the particle size distribution of a coffee grinder with a conical burr. In this case, since approximately 10% to 20% of particles is distributed across multiple size ranges, the dominant particle group, corresponding to the highest peak in the graph, accounts for roughly 70% to 80% of the total particle size distribution.

FIG. 5(c) depicts the particle size distribution of a coffee grinder with a flat burr.

In FIG. 5(c), the distribution curve for the flat burr exhibits a higher peak than that shown in FIG. 5(b), indicating that the dominant particle group is more narrowly concentrated, accounting for approximately 80% to 90% of the total particle size distribution.

Accordingly, the particle size distribution produced by the flat burr is more uniform and narrow than that of the conical burr. This results in a cleaner and more consistent flavor profile during extraction.

On the contrary, because the conical burr produces coffee grounds that are relatively more distributed across different particle sizes, in which finer particles tend to cause over-extraction and coarser particles tend to cause under-extraction, the resulting coffee generally exhibits greater flavor complexity than that produced by the flat burr.

Of course, the flavor profiles produced by different burr geometries in coffee grinders ultimately reflect user preference. These differences in burr types represent distinct flavor and aroma characteristics, not the objective quality.

Furthermore, the flat burr grinds coffee beans at higher rotational speeds using centrifugal force, whereas the conical burr grinds beans at relatively lower rotational speeds. Because the conical burr operates at a slower speed, it generates less heat at the cutting edges, and consequently, the aroma and flavor of coffee obtained with the conical burr may be superior to those obtained using the flat burr.

On the contrary, the high rotational speeds of the flat burr lead to significant heat generation at the cutting edges, which partially degrades the aroma and flavor compounds in the coffee. Thus, the need for thermal management is critical. Some flat-burr grinders address this issue not by reducing heat generation, but by maintaining a consistent temperature, intentionally allowing a similar level of heat, thereby producing a uniform flavor profile. Such differences in flavor characteristics reflect distinct grinder behaviors, and the choice between grinders ultimately depends on user preference.

In detail, as illustrated in FIG. 5(b), the conical burr produces a significant proportion of grounds concentrated near the center of the distribution curve, while still producing a certain degree of dispersion across different particle size ranges. Consequently, finer particles tend to be over-extracted, whereas coarser particles are more likely to be under-extracted, resulting in a more complex flavor profile.

As illustrated in FIG. 5(c), the flat burr produces a particle size distribution that is highly concentrated near the center of the curve, generating only a small proportion of fine particles and an even smaller proportion of coarse particles. Consequently, the uniform particle size distribution produced by the flat burr leads to a consistent, clean flavor profile in the extracted coffee.

Beyond the conical and flat burrs, other types of grinders also exist, including those that employ blade geometries or crushing mechanisms similar to the action of crushing garlic.

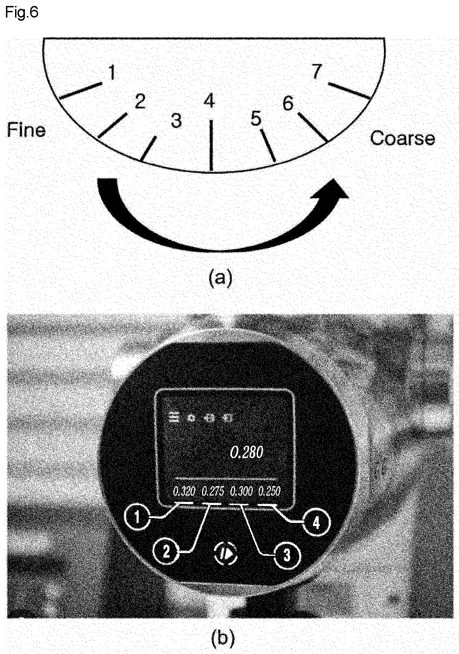

FIG. 6 is a view illustrating the adjustment of the grind size in a coffee grinder.

FIG. 6(a) depicts an adjustment plate used to modify the grind size, and FIG. 6(b) depicts a digitized adjustment plate. The numerical scales and grind size settings differ among coffee grinder manufacturers. In other words, numerical settings do not universally correspond to finer or coarser grinding. Recently, as coffee grinder settings have become increasingly digitized, various models have been developed that allow users either to adjust the grind size by manually manipulating a physical adjustment mechanism or by electronically manipulating a touch display.

In general, low-cost coffee grinders adjust the grind size by moving an upper burr, whereas high-end grinders adjust the grind size by moving a lower burr to enhance user convenience. In such high-end grinders, the lower burr is connected to a drive shaft, which contributes to increased manufacturing cost. Additionally, the rotational direction or numerical scale associated with finer or coarser grinding varies across manufacturers. In the present embodiment, these details are construed as exemplary only without restrictive meaning.

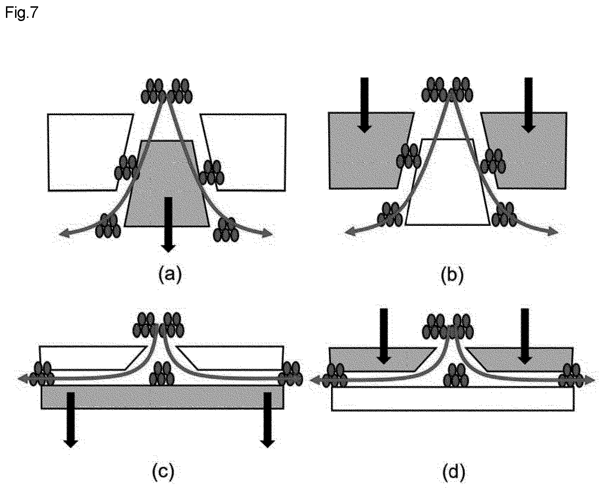

FIG. 7 is a view illustrating examples of a method for adjusting the grind size in a coffee grinder.

FIG. 7(a) depicts the state in which an upper burr of a conical-burr grinder is fixed while a lower burr is moved downward to produce coarser grounds, and FIG. 7(b) depicts the state in which the lower burr is fixed while the upper burr is moved downward to produce finer grounds. Similarly, FIG. 7(c) depicts the state in which an upper burr of a flat-burr grinder is fixed and a lower burr is moved downward to produce coarser grounds, and FIG. 7(d) depicts the state in which the lower burr is fixed and the upper burr is moved downward to produce finer grounds.

Of course, the design choice of whether the upper or lower burr moves during grinding differs among grinder manufacturers. In recent years, designs in which the lower burr is adjustable have become increasingly preferred for user convenience, despite the accompanying increase in manufacturing cost. That is, when the burrs are removed for replacement or cleaning and then reinstalled, any designs that adjust the upper burr height are inconvenient for users, because the original grind setting is lost once the burr is detached. On the contrary, because the lower burr is mechanically connected to an electric motor as the drive shaft, and therefore implementing lower-burr adjustment typically incurs higher manufacturing cost.

In addition to the conical and flat burrs, other types of grinders also exist, including those that chops coffee beans with blades and those that crushes beans. Despite these different physical mechanisms, the overall principles for adjusting the grind size remains generally consistent.

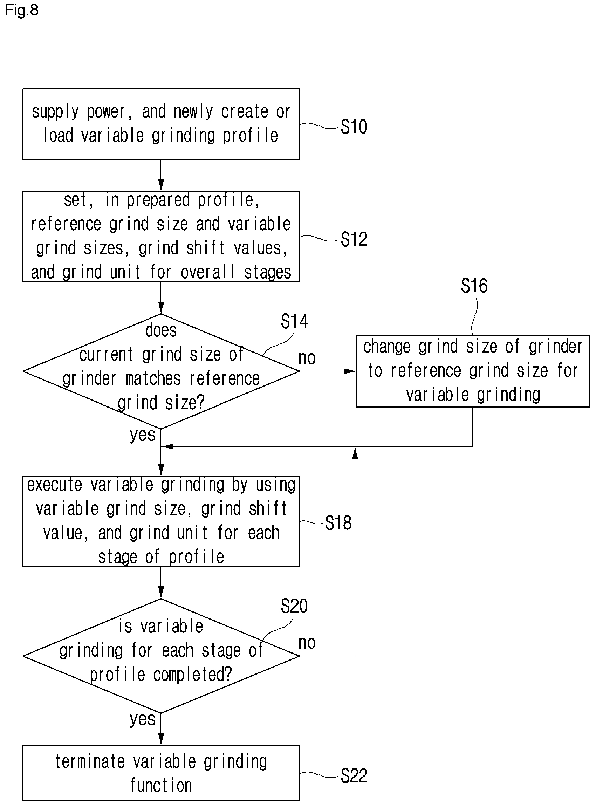

FIG. 8 is a flowchart illustrating the step-by-step procedure of a variable grinding method for improving coffee flavor complexity according to a preferred embodiment of the present disclosure.

In the variable grinding method for improving coffee flavor complexity according to the preferred embodiment of the present disclosure, the grind size is variably adjusted in the course of the process of grinding coffee beans using a coffee grinder. Rather than producing a single, uniform particle size at a fixed grind size setting as in conventional approaches, the method modifies the grind size so as to broaden and diversify the particle size distribution of ground coffee beans.

That is, although conventional coffee grinders operate with a fixed grind size setting, the burr design is engineered such that the resulting particle sizes exhibit slight variations depending on the specific burr geometry.

However, in conventional coffee grinders, two burrs aligned vertically or horizontally mesh and rotate to grind coffee beans, resulting in a particle size distribution that remains relatively uniform. Consequently, the grind size does not vary according to user preference, and the resulting coffee grounds exhibit a largely consistent particle size.

Accordingly, in the present embodiment, the grind size may be adjusted variably in the course of the grinding process either through a motor-driven electronic mechanism or through a digital control interface based on user-specified settings, thereby allowing the user to enjoy a wide range of flavor profiles tailored to individual preferences. Automatically varying the grind size of the coffee grinder during the grinding process may broaden the particle size distribution of coffee beans, thereby enabling the extraction of coffee with enhanced flavor complexity.

Whereas conventional coffee grinders produce a consistent and uniform flavor profile by grinding coffee beans at a fixed grind size, the variable grinding method of the present embodiment allows the particle size distribution of coffee beans to be modified according to user preference, thereby increasing the degree of freedom in tailoring coffee flavor.

Generally, grinding coffee beans refers to the process where a user-specified quantity of beans is entirely ground at a user-specified grind size.

Accordingly, variably grinding the coffee beans means grinding a portion of the total quantity at a variable grind size during the grinding process. In conventional commercial coffee grinders, the grind amount of beans is typically determined by time. High-end grinders, however, use a built-in scale to measure the grind amount by weight with greater precision. Furthermore, specialized high-end grinders employ a built-in camera to determine the grind amount by volume of ground coffee beans.

In FIG. 8, the variable grinding method for improving coffee flavor complexity according to the preferred embodiment of the present disclosure involves the user specifying a reference grind size and a grind unit as baseline parameters (e.g., grind size : 5, grind unit: 7 seconds/20 g - extraction: optimal). Unlike conventional consistent grinding, which maintains a fixed grind size throughout the entire process, variable grinding is performed according to the variable grind size, the grind shift value, and the grind unit specified by the user in the course of the grinding process.

That is, the variable grinding method according to the present embodiment includes the steps of: (a) preliminarily supplying power to a coffee grinder and loading an existing profile or creating a new one as a variable grinding user profile to be used; (b) setting, in the prepared profile, a reference grind size, and variable grind sizes, grind units, and grind shift values for the overall stages of the profile; (c) performing a variable grinding function while grinding coffee beans, based on the reference grind size, and the variable grind sizes, the grind units, and the grind shift values defined for the overall stages; and (d) terminating the variable grinding function when the grinding of coffee beans is completed.

The reference grind size refers to the grind size value used when uniformly grinding the entire quantity of coffee beans in a fixed grind size mode, and serves as the baseline parameter for performing variable grinding.

The grind unit refers to the quantitative metric which shows how much of coffee beans has been ground, and is used to determine whether the grinding process is in progress or has been completed using one or more selected from the time required to grind coffee beans, the weight of ground coffee beans, and the volume of ground coffee beans.

The variable grind size refers to the grind size value variably adjusted in the course of the grinding process while coffee beans are ground at the fixed reference grind size.

The grind shift value may include the time required for a burr to move to a position corresponding to the desired grind size and a parameter that determines whether grinding is to be continued or temporarily haltered during burr movement to the corresponding position.

The reference grind size may be defined using a prestored fixed grind size value.

The existing profile may provide an automatic setting function. Specifically, based on the currently set reference grind size, when one or more stages corresponding to either user-specified finer or coarser grind sizes is set, the grind sizes for the remaining stages may be automatically calculated.

Alternatively, the existing profile may provide a simple three-step grinding function. Specifically, based on the currently set reference grind size, when user-specified desired variable grind size ratio and grind unit ratio are set, an automatic offset calculation may be performed to determine the variable grind size ratio and the grind unit ratio for a finer stage, a coarser stage, and a base stage for grinding at the reference grind size.

Alternatively, the existing profile may provide a simple two-step grinding function. Specifically, based on the currently set reference grind size, when one stage corresponding to either a user-specified finer or coarser fraction is set, an automatic offset calculation may be performed to determine the variable grind size, the grind unit, and the grind shift value for the remaining stage.

In step (c), when executing the variable grinding function based on the set parameters of variable grind-size stages, for the case in which the current grind size of the grinder differs from the reference grind size defined in the profile to be used, an initialization operation may be performed to shift the current grind size to the reference grind size before the execution of the variable grinding function.

Additionally, in step (c), when the variable grinding function has been completed using the set parameters of variable grind-size stages, the current grind size may be restored to the reference grind size.

In step (a), a profile newly created or modified may be save in response to a user request, when the profile remains unsaved prior to the termination of the function, the profile is saved upon receiving confirmation from the user that the user wishes to save it.

More specifically, in step S10, when power is supplied to the coffee grinder via a power supply unit, a controller loads a variable grinding user profile used for performing variable grinding either by creating a new one or retrieving an existing one stored in memory in response to a user operation command input through an input unit.

In step S12, the controller sets, in the prepared profile, the reference grind size, and the variable grind sizes, the grind shift values, and the grind units for the overall stages of the profile.

In step S14, the controller determines whether the currently set grind size matches the reference grind size.

When the result of step S14 indicates that the currently set grind size does not match the reference grind size, the controller changes the grind size of the grinder to the reference grind size that serves as the baseline for variable grinding (S16).

On the contrary, when the result of step S14 indicates that the currently set grind size matches the reference grind size or when step S16 has been executed, the controller performs variable grinding by using the variable grind size, the grind shift value, and the grind unit defined for each stage of the profile (S18).

In step S20, the controller determines whether variable grinding for each stage of the profile has been completed.

When the result of step S20 indicates that variable grinding for each stage has not yet been completed, the controller repeats steps S18 to S20.

On the other hand, when the result of step S20 indicates that variable grinding for each stage has been completed, the controller terminates the variable grinding function.

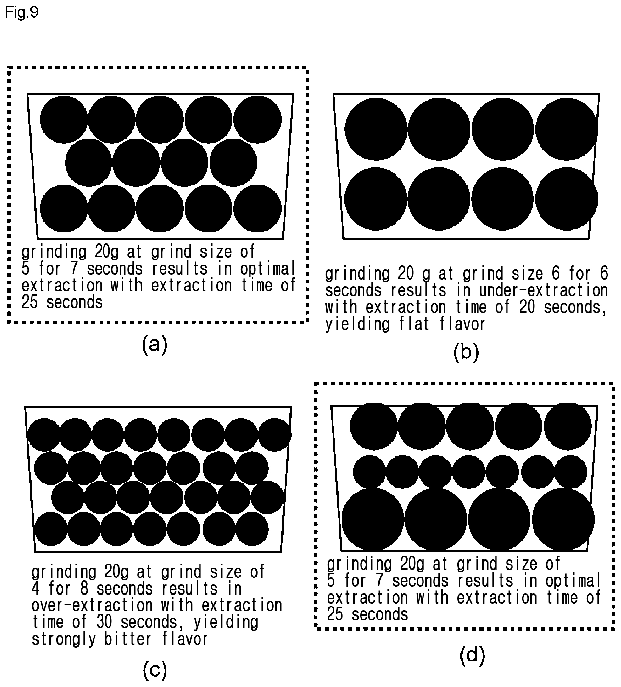

For example, FIG. 9 is a view illustrating examples of a method for determining the grind size in the course of the grinding process in the variable grinding method for improving coffee flavor complexity according to the present disclosure.

FIG. 9(a) depicts an example in which coffee grounds are produced at a fixed grind setting according to conventional techniques, exhibiting a nearly uniform distribution with an extraction resistance set to an optimal level. Here, the extraction time is approximately 25 seconds, and the resulting coffee flavor is optimal.

FIG. 9(b) depicts an example in which the grind size is adjusted to a coarser level while still using a fixed grind setting according to conventional techniques. Here, the extraction time is reduced by approximately 5 seconds, resulting in an extraction time of about 20 seconds, and the resulting coffee flavor becomes relatively flat and lacking in complexity.

FIG. 9(c) depicts an example in which the grind size is adjusted to a finer level while still using a fixed grind setting according to conventional techniques. The extraction time is increased to approximately 30 seconds, about 5 seconds longer than the optimal 25-second extraction, and the resulting coffee flavor becomes strongly bitter due to over-extraction.

FIG. 9(d) depicts an example of applying the variable grinding method of the present embodiment. That is, when optimal grounds in FIG. 9(a) are taken as the baseline and coarser grounds in FIG. 9(b) and finer grounds in FIG. 9(c) are mixed in equal proportions, the coarser and finer fractions of FIG. (b) and FIG. (c) offset each other, resulting in optimal extraction, nearly comparable to that achieved with the grind size of FIG. 9(a).

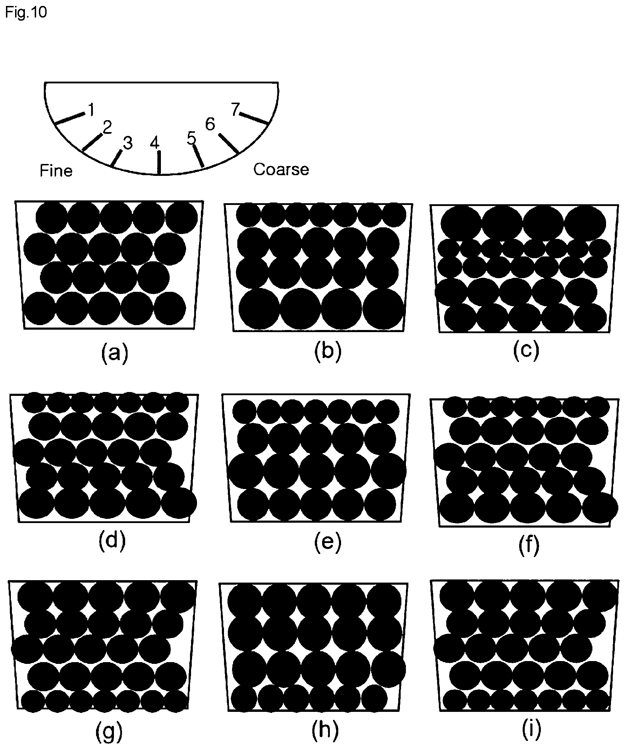

FIG. 10 is a view illustrating an exemplary implementation of the variable grinding method according to the present embodiment.

The five major elements required to implement the variable grinding method as described above are as follows.

The first element is an equal offset method. The second element is a grind size calculation method, which is distinct from the aforementioned equal offset approach, in which the variable grind size and the grind unit (either time or weight) are numerically quantified.

The third element is a method in which the grind unit is defined by the grind time during variable grinding. The fourth element is a method in which the grind unit is defined by the measured weight or volume of ground coffee beans. The fifth element is a method in which the grind shift value is defined based on the time required for a burr to move to a position corresponding to the desired grind size during variable grinding and whether grinding is to be continued or temporarily haltered during burr movement.

Because the setting parameters of conventional commercial coffee grinders vary among manufacturers, the following description adopts the convention that lower numerical values correspond to finer grind sizes and higher numerical values correspond to coarser grind sizes.

FIG. 10(a) depicts an example in which coffee beans are ground at a fixed grind size according to conventional techniques. Specifically, FIG. 10(a) represents a case in which 20 g of coffee beans are ground at a grind size of 5 for 7 seconds, yielding optimal extraction with an extraction time of approximately 25 seconds.

FIG. 10(b) depicts an example of applying the equal offset method within the variable grinding method. That is, FIG. 10(b) represents a case in which the upward and downward grind size adjustments are applied in equal proportions so that the resulting extraction resistance matches that of the conventional fixed setting. Accordingly, when grinding is performed coarser at a grind size of 6 for 1 second, then at the reference setting at a grind size of 5 for 5 seconds, and finally finer at a grind size of 4 for 1 second, the downward adjustment at a grind size of 6 and the upward adjustment at a grind size of 4 act in the opposite directions and thus offset each other. As a result, the overall extraction time remains approximately 25 seconds, comparable to that achieved by the method illustrated in FIG. 10(a). Although this method is simple and effective from the standpoint of extraction time, it is considered semi-automated in nature rather than fully automated.

FIG. 10(c) depicts an example of applying the grind size calculation method within the variable grinding method. That is, FIG. 10(c) represents a case in which the grind size and time parameters for each stage are numerically quantified to balance the extraction resistance.

To achieve this, when finer grinding is performed at a grind size of 4, which is -1 relative to the reference grind size of 5, for approximately 10% of the total grind amount of coffee beans, and at a grind size of 3, which is -2 relative to the reference grind size of 5, for another approximately 10% of the total grind amount, the variation in extraction resistance is readily calculated following "grind size × grind ratio × grind time". The resulting formula is (-1 × 10% × 1) + (-2 × 10% × 1) = -0.3. To add a coarser fraction, approximately 10% of the total grind amount may be ground at a grind size that is +3 relative to the reference grind size for 1 second. By applying coarser grinding at a grind size of 8 for 1 second on 10% of the total grind amount, the method illustrated in FIG. 10(c) achieves an extraction time of approximately 25 seconds, resulting in optimal extraction comparable to that achieved by the method illustrated in FIG. 10(a).

Of course, the process may be configured with multiple stages rather than a single stage, and it may also be modified such that the total variations generated across the multiple grinding stages are collectively offset in the base grinding stage.

FIG. 10(d) depicts an example of applying the method of determining the grind unit based on the grind time within the variable grinding method. That is, in FIG. 10(d), optimal extraction may be achieved by allocating the total grind time of 7 seconds as follows: 1 second at a grind size of 5.5, 5 seconds at a grind size of 5, and 1 second at a grind size of 4.5.

FIG. 10(e) depicts an example of applying the method of determining the grind unit based on the weight or volume of ground coffee beans within the variable grinding method. That is, in FIG. 10(e), grinding 16 g at a grind size of 5, 2 g at a grind size of 6, and 2 g at a grind size of 4 may yield an offsetting effect. However, such weight- or volume-based calculation is generally feasible only in high-end or specialized grinders with a built-in scale. Likewise, volume-based calculation requires a grinder equipped with a camera. Of course, as technology advances and grinders incorporating built-in scales or cameras become more common in use, this approach may be applied more effectively.

The overall grinding sequence illustrated in FIG. 10 proceeds as follows. Unless the user specifies otherwise, the grinder first operates at the fixed reference grind size, then shifts to a finer grind size, returns again to the reference grind size, and finally shifts to a coarser grind size, thereby completing the grinding cycle, after which the grind size setting is restored to the reference value. This sequence is advantageous both from a mechanical design standpoint and in terms of flavor consistency. This is because finer grind sizes require smaller particle sizes, closer burr spacing, and typically longer grind time. Accordingly, in FIG. 10(e), a total of 20 g is allocated as follows: 8 g at a grind size of 5 for the first stage, 2 g at a grind size of 4 for the second stage, 8 g at a grind size of 5 for the third stage, and 2 g at a grind size of 6 for the fourth stage. The adjustment at a grind size of 4 for finer grinding and the adjustment at a grind size of 6 for coarser grinding offset each other, resulting in optimal extraction.

FIG. 10(f) illustrates an example of applying the method of determining the grind size transition time (the grind shift value) within the variable grinding method. That is, in FIG. 10(f), the total grind time is set to 10 seconds, and the shift time between grind sizes is set to 2 seconds. The grind size first shifts from 5 to 6 and subsequently shifts from 6 to 4. Because each shift requires 2 seconds, three shifts from a grind size of 5 to a grind size of 4, from a grind size of 4 to a grind size of 5, and from a grind size of 5 to a grind size of 6 account for a total of 6 seconds. The remaining 4 seconds are used for the actual grinding, allocated as 1 second at a grind size of 4, 2 seconds at a grind size of 5, and 1 second at a grind size of 6, resulting in a combined grind time of 10 seconds. These upward and downward grind size adjustments offset each other, resulting in optimal extraction. Although the shift speed is calculated as 2 seconds per grind size unit, the grind size may instead be shifted directly to any desired value within a single set time, rather than shifting stepwise. Here, an excessively rapid transition time, however, impose mechanical issues in the coffee grinder. Therefore, it may be more reliable for the shift speed to be predetermined by manufacturers rather than by users. Consequently, it is desirable to provide the user with selectable options for the shift speed and whether grinding is to be continued or temporarily haltered during shifting.

FIG. 10(g) depicts an example similar to that illustrated in FIG. 10(f), except that the sequence begins by shifting to a finer grind size and subsequently shifts to a coarser grind size. That is, in FIG. 10(g), the user may specify the desired order of grind size shifts. Allowing the user to determine whether finer grinding is applied at the beginning or at the later stage is advantageous, as the optimal order may depend on various factors such as the desired flavor profile, the characteristics of the extraction machine, and the mechanical structure of the coffee grinder. In general, performing the finer grinding first, followed by the coarser grinding, tends to yield more favorable results, both in terms of the mechanical stability of the coffee grinder and the overall flavor profile. Additionally, when the variable grinding sequence is completed, it is preferable to restore the grind size setting to the reference value. Of course, allowing the user to determine whether this restoration is applied may always be an effective approach in terms of user convenience.

FIG. 10(h) depicts an example of the grind size calculation method, in which the grind size is adjusted either upward or downward through a simple two-step process. This method represents the easiest approach, in which when the user specifies the quantity of additional fine or coarse fraction, the user-specified fraction is offset automatically in the remaining grinding stage. Accordingly, when grinding for 7 seconds at a grind size of 5 yields optimal extraction, and the user applies an upward adjustment of -1 by grinding more finely at a grind size 4 for 2 seconds, the simplified formula described earlier results in (-1 × 2) = -2. To compensate for this, the remaining stage is allocated 5 seconds, which produces an offset of (+0.4 × 5) = +2, which is automatically computed. Therefore, grinding at a grind size of 5.4 for 5 seconds yields an offsetting effect, resulting in optimal extraction.

FIG. 10(i) depicts an example opposite to that of FIG. 10(h), in which the grind size is adjusted through a two-step process when coarser grinding is applied. That is, in FIG. 10(i), when grinding is performed at a grind size of 7, which is +2 relative to the optimal grind size, for 2 seconds, the simplified formula yields (+2 × 2) = +4. To compensate for this, the remaining stage generates an offset of (-0.8 × 5) = -4. Therefore, grinding at a grind size that is -0.8 relative to the optimal grind size for 5 seconds results in an offsetting effect. Given that the optimal grind size is 5, applying a -0.8 adjustment results in a grind size of 4.2, and grinding at this value for 5 seconds achieves optimal extraction. It should be noted that the actual extraction time may exhibit slight deviations from the calculated value. This is because, according to the above-described approach, burr design varies among coffee grinder manufacturers, and each burr geometry produces a distinct particle size distribution. However, such deviations are generally minimal and therefore may be disregarded in the context of coffee extraction.

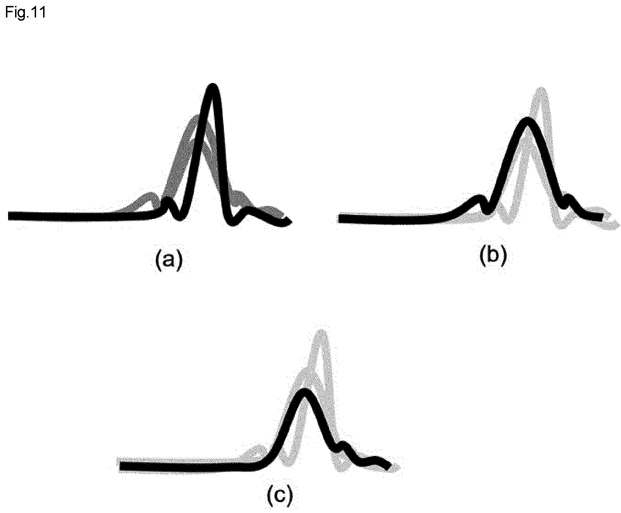

FIG. 11 is a view illustrating the results of the variable grinding method according to the present disclosure.

FIG. 11(a) is a particle size distribution graph obtained using a standard flat burr. In this graph, the vertical axis represents the proportion of particle sizes of coffee beans, and the horizontal axis represents particle size.

As illustrated in FIG. 11(a), the particles are clustered around a specific grind size, and the proportion of particles that deviate from this range is relatively small. Accordingly, a clean and uniform flavor characteristic of flat-burr grinding may be expected.

FIG. 11(b) is a particle size distribution graph in which compared to FIG. 11(a), the particle size distribution becomes less concentrated, resulting in a broader range of particle groups. In particular, a slightly larger proportion of finer particles is present.

FIG. 11(c) is a particle size distribution graph in which the particle size distribution exhibits a more pronounced separation of particle groups compared to FIG. 11(b). Specifically, the proportion of coarser particles increases, whereas the proportion of finer particles decreases. As a result, the degree of over-extraction is reduced and the degree of under-extraction is slightly increased, which may lead to a flavor profile that lacks desired complexity.

However, since coffee flavor is inherently subjective, variations that do not exceed reasonable adjustment limits may still be regarded as acceptable differences in individual flavor preference.

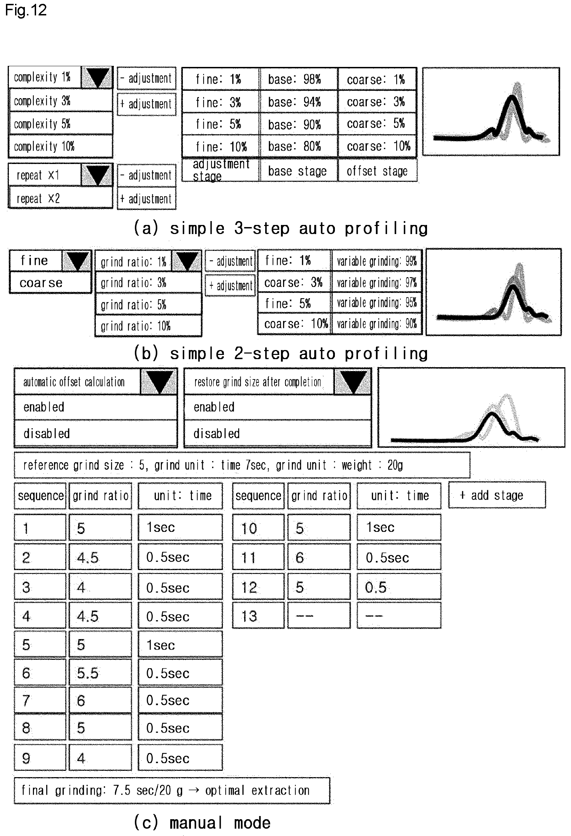

FIG. 12 is a view illustrating the actual use state of the variable grinding method according to the present embodiment.

FIG. 12 depicts an example in which two types of user-interface configurations are implemented for setting a coffee grinder.

In the present embodiment, in order to eliminate inconveniences that may arise when the user manually inputs each parameter to implement the variable grinding method, a basic profiling function is provided for general users who are not experts. This allows the user to pursue enhanced flavor complexity simply by selecting a desired option.

FIG. 12(a) depicts a case in which the equal offset method is implemented as a three-step process within the variable grinding method. When the user only specifies the desired complexity ratio and the grind unit ratio, an adjustment stage and an offset stage corresponding to the specified complexity ratio are automatically generated. These stages are then combined with one stage corresponding to the preset reference grind size to form a simple three-step profile.

That is, FIG. 12(a) illustrates an example of automatic profiling for general users. When the user specifies the desired complexity ratio, an upward adjustment stage and a downward adjustment stage are automatically set, and the user is provided with an option to select a complexity ratio mode based on either weight or time. Since most coffee grinders operate on a time-based grinding scheme, weight-based options are unnecessary for grinders that are not equipped with a built-in scale. Accordingly, the user may select a complexity ratio of 1% or 5%, and may further increase or decrease the value using "+" and "-" adjustment buttons. Of course, for more precise adjustments, the complexity ratio may be implemented with a resolution up to the second decimal place. Additionally, depending on the mode selected by the user, a corresponding particle distribution pattern may be visually displayed, enabling the user to easily recognize and configure the grinding settings. The user may also select a repeat option to repeatedly apply the same particle distribution pattern during grinding.

FIG. 12(b) depicts a case in which the grind size calculation method is implemented as a two-step process within the variable grinding method. When the user inputs only the desired variable grind size ratio and the grind unit ratio, the first stage is automatically generated based on this input. The remaining second stage is then automatically computed to provide an offset stage corresponding to the user-specified variable grind size, thereby completing the profile.

For example, when the user selects a finer grinding adjustment of 1% and a grind ratio of 1%, the second stage is automatically computed to offset the applied variation. In this manner, a single adjustment stage and one corresponding offset stage form a simple two-step profile, allowing general users to operate the grinder with ease.

FIG. 12(c) depicts a mode for expert users, in which the user may add one or more adjustment stages, and may individually set the reference grind size, the variable grind size, the grind unit, and the grind shift value for each stage. When the user enables an automatic offset calculation function, the user is provided in real time with offset values corresponding to the variable grinding parameters input by the user, thereby allowing a profile to be created with ease. Of course, when the automatic offset function is disabled, grinding is performed strictly according to the settings specified by the user, and optimal extraction needs to be evaluated and finely adjusted by the user for each stage. The user may selectively enable the automatic offset calculation function, and may also selectively set the grinder to return to the reference grind setting upon completion of the grinding process.

Through the process described above, the present disclosure enables a single coffee grinder to produce a wide spectrum of flavor profiles, effectively emulating the characteristics of multiple different grinder types.

In particular, the disclosure enables the extraction of coffee with enhanced flavor complexity by producing a broader particle size distribution similar to that of a conical-burr grinder, rather than a flat-burr grinder with an otherwise fixed and consistent flavor profile.

Additionally, the disclosure may be applied to various other grinder types beyond conical-burr systems, offering a wide range of additional flavor variations.

Furthermore, because the present disclosure functions analogously to adding salt, sugar, or seasonings in cooking, excessive variations may degrade the overall flavor. Accordingly, by storing user-preferred settings and applying them as needed, the disclosure enables convenient and consistent preparation of coffee with the desired degree of flavor complexity.

Although the present disclosure has been described in detail with reference to the foregoing embodiments, these embodiments are merely illustrative and not limiting. Various modifications and alterations may be made without departing from the spirit or scope of the present disclosure.

### Industrial Applicability

The present disclosure can find application in variable grinding techniques in which the grind size is variably adjusted in the course of grinding of coffee beans, thereby enhancing the flavor complexity of coffee.

## Claims

1. A variable grinding method for improving coffee flavor complexity, in which variable grinding is performed according to user-specified parameters including a variable grind size, a grind shift value, and a grind unit in the course of a grinding process, based on a preset reference grind size and a preset grind unit, the method comprising the steps of:
(a) preliminarily supplying power to a coffee grinder and loading an existing profile or creating a new one as a variable grinding user profile to be used;
(b) setting, in the prepared profile, a reference grind size, and variable grind sizes, grind units, and grind shift values for the overall stages of the profile;
(c) performing a variable grinding function while grinding coffee beans, based on the reference grind size, and the variable grind sizes, grind units, and grind shift values defined for the overall stages; and
(d) terminating the variable grinding function when the grinding of coffee beans is completed.

2. The variable grinding method of claim 1, wherein the reference grind size refers to a grind size value used when uniformly grinding the entire quantity of coffee beans in a fixed grind size mode, and serves as a baseline parameter for performing variable grinding.

3. The variable grinding method of claim 1, wherein the grind unit is a quantitative metric which shows how much of coffee beans has been ground, and is used to determine whether the grinding process is in progress or has been completed using one or more selected from a time required to grind coffee beans, a weight of ground coffee beans, and a volume of ground coffee beans.

4. The variable grinding method of claim 1, wherein the variable grind size refers to a grind size value variably adjusted in the course of the grinding process while coffee beans are ground at a fixed reference grind size.

5. The variable grinding method of claim 1, wherein the grind shift value includes a time required for a burr to move to a position corresponding to the desired grind size and a parameter that determines whether grinding is to be continued or temporarily haltered during burr movement to the corresponding position.

6. The variable grinding method of claim 1, wherein the reference grind size is defined using a prestored fixed grind size value.

7. The variable grinding method of claim 1, wherein the existing profile provides an automatic setting function in which based on the currently set reference grind size, when one or more stages corresponding to either user-specified finer or coarser grind sizes are set, the grind sizes for the remaining stages are automatically calculated.

8. The variable grinding method of claim 1, wherein the existing profile provides a simple three-step grinding function in which based on the currently set reference grind size, when user-specified desired variable grind size ratio and grind unit ratio are set, an automatic offset calculation is performed to determine the variable grind size ratio and the grind unit ratio for a finer stage, a coarser stage, and a base stage for grinding at the reference grind size.

9. The variable grinding method of claim 1, wherein the existing profile provides a simple two-step grinding function in which based on the currently set reference grind size, when one stage corresponding to either a user-specified finer or coarser fraction is set, an automatic offset calculation is performed to determine the variable grind size, the grind unit, and the grind shift value for the remaining stage.

10. The variable grinding method of claim 1, wherein in step (c), when executing the variable grinding function based on the set parameters of variable grind-size stages, for the case in which a current grind size of the grinder differs from the reference grind size defined in the profile to be used, an initialization operation is performed to shift the current grind size to the reference grind size before the execution of the variable grinding function.

11. The variable grinding method of claim 1, wherein in step (c), when the variable grinding function has been completed using the set parameters of variable grind-size stages, a current grind size is restored to the reference grind size.

12. The variable grinding method of claim 1, wherein in step (a), a profile newly created or modified is save in response to a user request, and when the profile remains unsaved prior to the termination of the function, the profile is saved upon receiving confirmation from the user that the user wishes to save it.
